# EUROPÄISCHE PATENTSCHRIFT

(11) **EP 1 434 949 B1**
(45) Veröffentlichungstag und Bekanntmachung des Hinweises auf die Patenterteilung: **08.10.2008**
(21) Anmeldenummer: 02777239.1
(22) Anmeldetag: 27.09.2002
(51) Int. Cl.: F16D 55/2255, F16D 66/02, B60T 13/74

(54) **SCHEIBENBREMSE UND VERFAHREN ZUR BESTIMMUNG DER BREMSKRAFT EINER SCHEIBENBREMSE**
DISC BRAKE AND A METHOD FOR DETERMINING THE BRAKING FORCE OF A DISC BRAKE
FREIN A DISQUE ET PROCEDE POUR DETERMINER LA FORCE DE FREINAGE D'UN FREIN A DISQUE

(30) Priorität: 01.10.2001 DE 10148472
(43) Veröffentlichungstag der Anmeldung: 07.07.2004
(73) Patentinhaber: KNORR-BREMSE SYSTEME FÜR NUTZFAHRZEUGE GMBH, 80809 München (DE)
(72) Erfinder: BAUMGARTNER, Johann, 85368 Moosburg (DE); GANZHORN, Dirk, 80809 München (DE)
(86) Internationale Anmeldenummer: PCT/EP2002/010853
(87) Internationale Veröffentlichungsnummer: WO 2003/029682

(56) Entgegenhaltungen:
- EP-A- 0 588 193
- EP-A- 0 995 657
- DE-A- 4 330 440
- US-A- 4 602 702
- US-A- 5 848 673

## Beschreibung

Die Erfindung betrifft eine Scheibenbremse nach dem Oberbegriff des Anspruches 1.

Bei Bremsen verschiedenster Art, insbesondere bei pneumatisch betätigten Nutzfahrzeugbremsen erfolgt die Bremskraftübertragung mittels eines Bremsbetätigungshebels, der von der Kolbenstange eines Bremszylinders betätigt wird. Der Bremsbetätigungshebel setzt die Kraft der Betätigungseinheit (Membranzylinder, allgemeiner Aktuator) mit dem Übersetzungsverhältnis des Bremsbetätigungshebels um bzw. multipliziert diese mit dem Übersetzungsverhältnis und erhöht damit die Bremskraft. Ein besonderer Vorteil eines derartigen Hebelsystems besteht in der Möglichkeit zur Erzeugung hoher Bremskräfte mit nur relativ geringen Ausgangskräften.

Zur Steuerung und/oder Regelung der Bremskräfte wird der an dem pneumatischen Zylinder anliegende Druck ausgewertet. Dieser wird mit einem Sollwert verglichen, so daß bei Bedarf eine Regelung durchgeführt werden kann. Die Druckregelung beruht auf dem Vorhandensein eines pneumatischen Aktuators, welcher mit Druckluft gespeist wird.

Bei Bremsen, welche hydraulisch oder elektromechanisch über einen Elektromotor mit einem Linearantrieb den Hebelmechanismus der Bremse betätigen, fällt der Luftdruck als vorteilhafte Regelungsgröße weg.

Eine gattungsgemäße Scheibenbremse ist aus der EP 0 976 943 A1 bekannt, in der vorgeschlagen wird, Dehnungsmessstreifen an einen Bremshebel z.B. einer Scheibenbremse anzusetzen. Eine weitere derartige Anordnung ist aus der EP 0 995 657 A2 bekannt. Nachteilig ist, dass die Dehnungsmessstreifen an einem bewegbaren Teil befestigt sind.

Die Erfindung hat daher die Aufgabe, die Scheibenbremse der gattungsgemäßen Art derart weiterzuentwickeln, daß die Dehnungsmessstreifen bei Scheibenbremsen verschiedenster Bauart, insbesondere bei Scheibenbremsen mit verschiedensten Aktuatoren, beispielsweise in pneumatischer, hydraulischer oder elektromechanischer Ausbildung in einfacherer Weise anwendbar sind.

Die Erfindung erreicht dieses Ziel in Hinsicht auf die Scheibenbremse durch den Gegenstand des Anspruches 1.

Vorteilhafte Ausbildungen der Erfindung sind den Unteransprüchen zu entnehmen.

Aus den Spannungsmessungen werden dann die Bremskräfte ermittelt, z.B. durch Vergleich und/oder Multiplikation mit vorgespeicherten Referenzwerten oder Konstanten.

Diese Meßgröße ist nach einer besonders vorteilhaften Idee der Erfindung um so besser zur Messung geeignet, je weniger Glieder zwischen der Meßgröße und der tatsächlichen Bremskraft liegen, da jedes Übertragungsglied wiederum fehlerhaft ist.

Die Meßstelle bzw. das Element, an dem gemessen wird, darf wiederum keinem Verschleiß unterliegen, da sonst die Messungen im Laufe eines Bremslebens unterschiedliche Werte liefern würden. Ebenso ist es wichtig, daß keine äußeren Umwelteinflüsse wie Schmutz, Feuchtigkeit und mechanische Einflüsse, z.B. aufgeschleuderte Steine, die Meßstelle verunreinigen oder sogar in der Funktion beeinträchtigen können. Die Meßstelle muß bezüglich der hohen auftretenden Temperaturen im Bremsbetrieb geeignet gewählt werden. Insgesamt ist eine geringe Störanfälligkeit zu gewährleisten, um den Ansprüchen an dieses sicherheitsrelevante Teil gerecht zu werden.

Anstelle des Bremsbetätigungshebels kann auch der Bremssattel selbst als Ort der Messung genutzt werden. Er dehnt sich bei Betätigung der Bremse als Folge der aufgebrachten Reaktionskräfte aus.

Als weitere geeignete Mess-Stelle wird ein Verschlußgehäuse für den Bremssattel oder der im Anspruch 1 genannte Bereich des Sattels genutzt. An der Innenseite des Verschlußgehäuses oder direkt am Bremssattel stützt sich der Bremsbetätigungshebel über Lager ab, so daß hier die Bremskraft über das Verschlußgehäuse - bei einer mehrteiligen Ausbildung des Bremssattels mit Verschraubungen - oder direkt in den Bremssattel - bei einer einteiligen Ausbildung - eingeleitet wird. Spannungen sind hier im Wesentlichen proportional zur Bremskraft und können als Meßsignal zur Steuerung der Bremse verwendet werden.

Die Meßgrößen werden mit entsprechend angebrachten Dehnungsmeßstreifen, welchen ein Meßverstärker nachgeschaltet ist, ausgewertet werden. Das dabei erhaltene Signal steht in direkter Relation zur Bremskraft bzw. zum Bremsmoment und kann daher als Meßgröße für die Regelung der Bremse verwendet werden.

Dehnungsmeßstreifen können je nach Meßstelle zur Viertel-, Halb- oder Vollbrücke geschaltet und mit einem einfachen Meßverstärker ausgewertet werden.

Das Anbringen der DMS kann durch verschiedene Verfahren erfolgen.

So können die Dehnungsmeßstreifen auf eine Fläche aufgeklebt werden. Als vorteilhafte Variante werden die DMS auf ein Trägerblech aufgebracht. Das Blech kann dann ohne weiteres auch unter ungünstigeren Bedingungen wie Schmutz, Feuchtigkeit o.ä., welche am Montageband auftreten können, auf die Meßstelle angeschweißt werden. Hiermit ist auch eine industrielle Maßanfertigung von Bremsbetätigungshebeln mit DMS möglich.

Aus der DE 196 40 901 C2 ist es zwar bekannt, an einem elektromechanischen Bremsaktuator mittels eines Sensors eine elastische Verformung der Zuspannvorrichtung zu messen, aus welcher die ausgeübte Zuspannkraft bestimmt wird. Dieses System hat aber den Nachteil, daß der Aktuator und die Betätigungseinheit eine nicht trennbare Einheit sind. Beim Austausch des Aktuators durch eine Betätigungseinheit mit einem anderen Funktionsprinzip fällt somit der Sensor weg. Hier schafft die Erfindung auf einfache Weise Abhilfe.

Nachfolgend wird die Erfindung anhand eines Ausführungsbeispieles näher beschrieben. Es zeigt:
- Figur 1: eine Draufsicht auf eine erste nicht erfindungsgemäße Scheibenbremse;
- Figur 2: eine Rückansicht einer zweiten, erfindungsgemäßen Scheibenbremse;
- Figur 3: einen Schnitt durch eine vierte nicht erfindungsgemäße Scheibenbremse;
- Figur 4: eine Draufsicht auf die Scheibenbremse der Figur 3;
- Figur 5, 6: Bremsbetätigungshebel für die Scheibenbremse aus Fig. 3;
- Figur 7: einen Bremsträger einer fünften nicht erfindungsgemäßen Scheibenbremse;
- Figur 8: eine Meßschaltung für die Bremsen der Fig. 1 - 7;
- Figur 9a,b: Diagramme, welche den proportionalen Zusammenhang zwischen der Bremskraft und dem ermittelten Dehnungsmeßstreifen-Signal anhand von Messungen am Bremsbetätigungshebel (nicht erfindungsgemäß) sowie erfindungsgemäß am Bremssattel veranschaulichen.

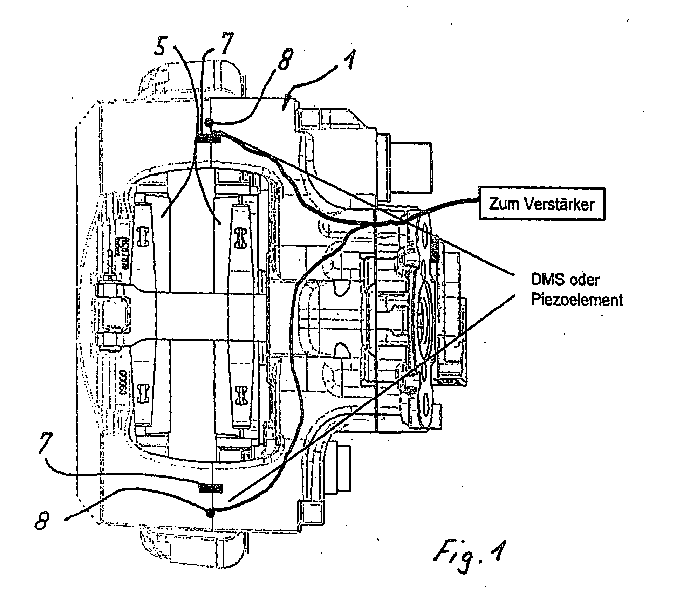

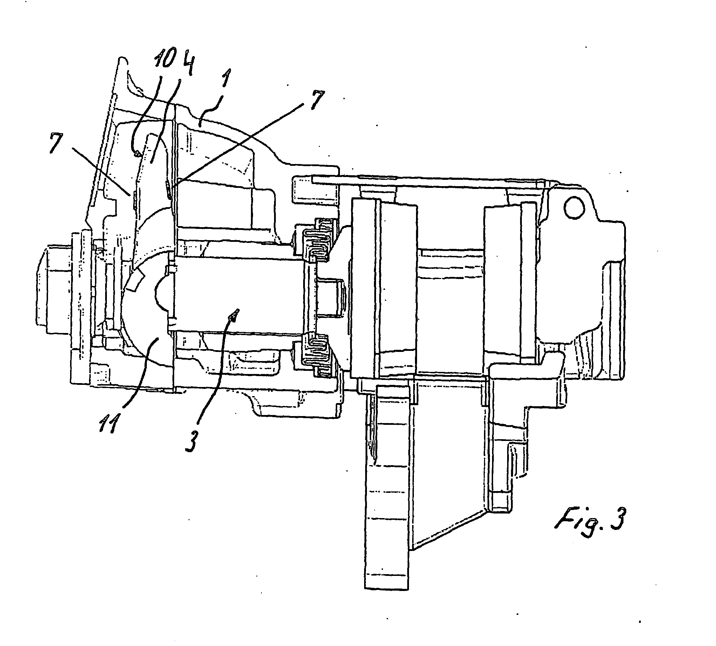

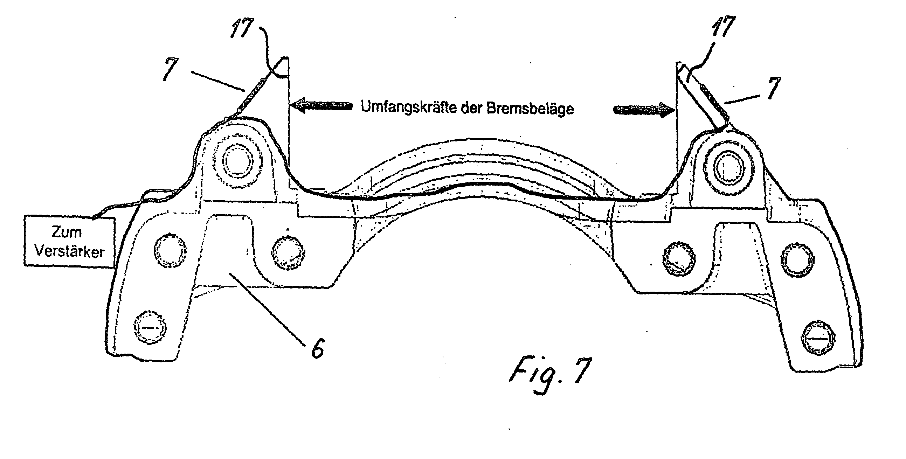

Figur 1 und 3 zeigen jeweils eine Scheibenbremse mit einem eine Bremsscheibe - hier nicht dargestellt - übergreifenden Bremssattel 1, wobei auf einer Seite des Bremssattels eine Zuspannvorrichtung bzw. ein Aktuator 3 angeordnet ist, der von einem Bremsbetätigungshebel 4 betätigt wird, auf den die nicht dargestellte Kolbenstange eines Bremszylinders einwirkt. Der Aktuator dient zum Vorschieben von Bremsbelägen 5 in Richtung der Bremsscheibe. Der Bremssattel 1 wird mittels eines Bremsträgers 6 an einer Radachse verschiebbar gelagert (Fig. 7).

Mit der Erfindung wird insbesondere für derartige Bremsen, wobei der Aktuator nach unterschiedlichen Funktionsprinzipien, z.B. pneumatisch, elektromechanisch oder hydraulisch betätigbar sein kann, eine geeignete Meßgröße für die Bremskraft bereitgestellt.

Eine Möglichkeit zur Durchführung der Messung stellt der Bremssattel 1 dar. Eine nicht erfindungsgemäße Variante zeigt Figur 1. Auf den Bremssattel 1 werden dabei in dem Bereich, in welchem die Reaktionskräfte von der den Aktuator aufnehmende Seite der Bremssattels auf die Reaktionsseite übertragen werden - z.B. in dem Bremsscheibe übergreifenden Bereich - Dehnungsmeßstreifen 7 (schwarze Rechtecke) oder Piezzoelemente 8 (schwarze Kreise) aufgebracht. Wenigstens ist ein Meßstreifen oder ein Piezzoelemente vorgesehen, vorteilhaft werden mehrere der Dehnungsmeßstreifen 7 oder der Piezzoelemente 8 am Bremssattel 1 verteilt. Nach Fig. 1 besteht noch die Besonderheit, daß bei dem dort gezeigten zweiteiligen Bremssattel mit Sattelteilen 2a, 2b die Dehnungsmeßstreifen oder die Piezzoelemente im Stoßbereich der zwei Sattelteile angeordnet sind.

Durch Schrägverschleiß an den Bremsbelägen kann eine unsymmetrische Belastung am Bremssattel 1 auftreten. Deshalb ist es sinnvoll, die Spannungen an beiden Seiten des Bremssattels 1 aufzunehmen und diese zu mitteln. Ein Vorteil dieser Anordnung liegt auch in der direkten Messung der Bremskraft ohne mechanische Zwischenglieder, welche eine Hysterese aufweisen können.

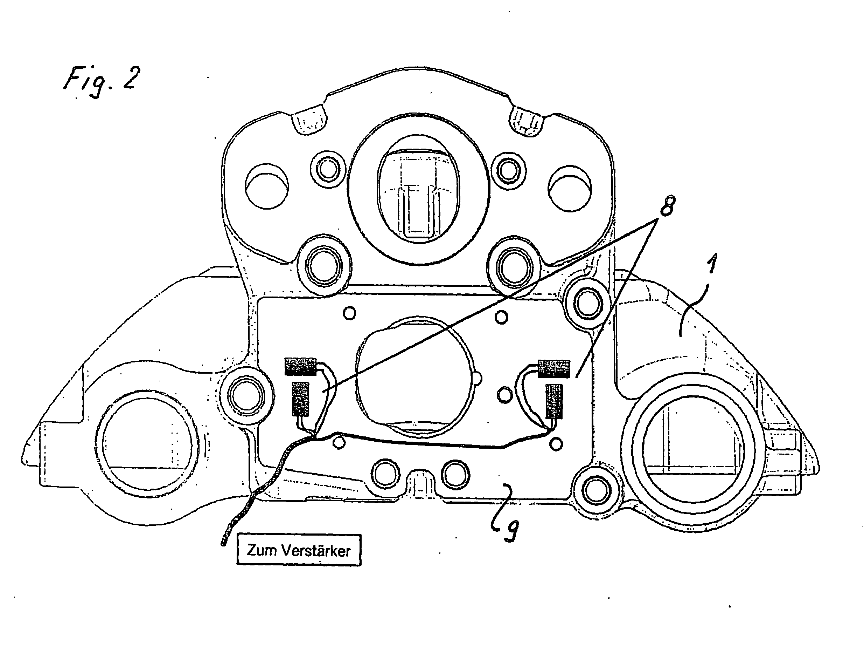

Erfindungsgemäß sind die Dehnungsmessstreifen 7 in dem von der Bremsscheibe abgewandten Bereichen des Bremssattels 1 oder im inneren oder äußeren Bereich eines Verschlußgehäuses 9 angeordnet (Fig. 2a).

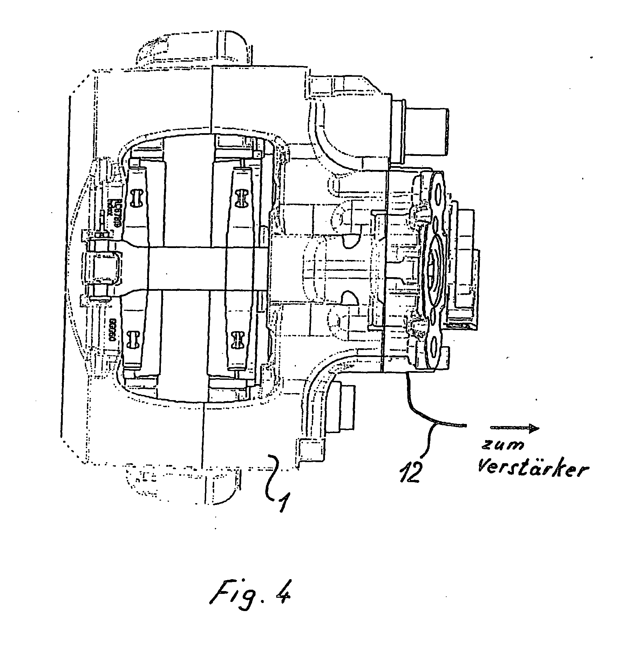

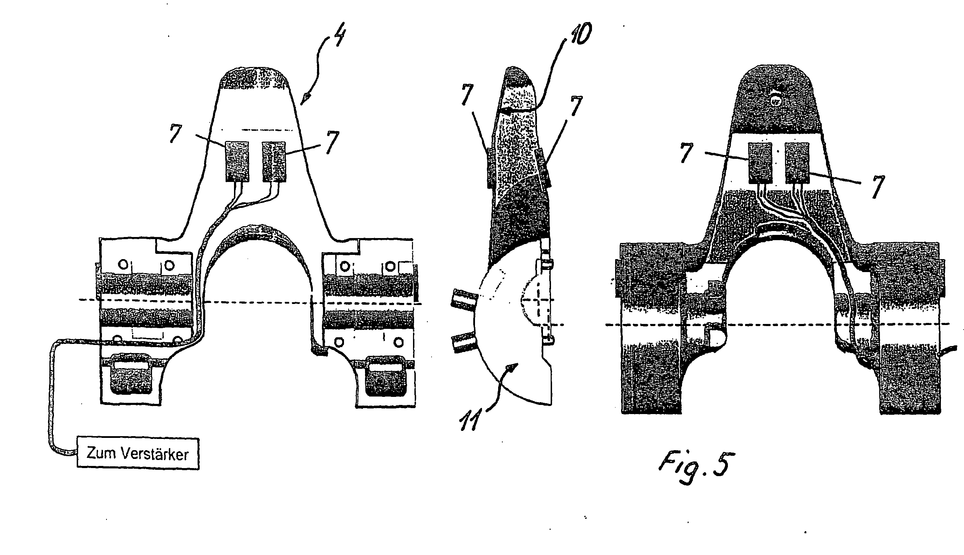

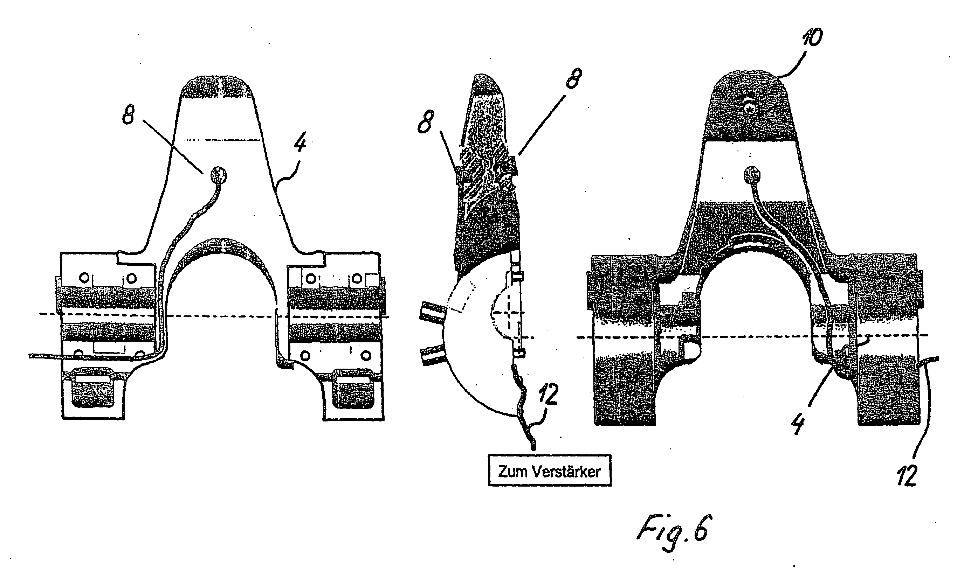

Nach den nicht erfindungsgemäßen Fig. 3 bis 6 sind die Dehnungsmeßstreifen 7 oder die Piezzoelemente 8 alternativ und/oder ergänzend zu den vorstehenden Ausführungsformen am Bremsbetätigungshebel 4 angeordnet, und zwar bevorzugt zwischen der Ausnehmung 10 für die Kolbenstange am Bremsbetätigungshebel 4 und dem unteren, exzenterartigen Abschnitt 11 des Bremsbetätigungshebels 4.

Nach dieser nicht erfindungsgemäßen Variante sind ferner jeweils auf der der Bremsscheibe zugewandten und auf der von der Bremsscheibe abgewandten Fläche des Bremsbetätigungshebels 4 die Dehnungsmeßstreifen 7 und/oder die Piezzoelemente 8 angeordnet (siehe Fig. 3, 5 und 6).

Fig. 7 zeigt ergänzend/alternativ eine nicht erfindungsgemäße Ausführungsform, bei welcher die Bremskraftmessung mittels am Bremsträger 6 und dort vorzugsweise mittels an den Bremsträgerhörnern angeordneter Dehnungsmeßstreifen 7 oder Piezzoelemente 8 erfolgt.

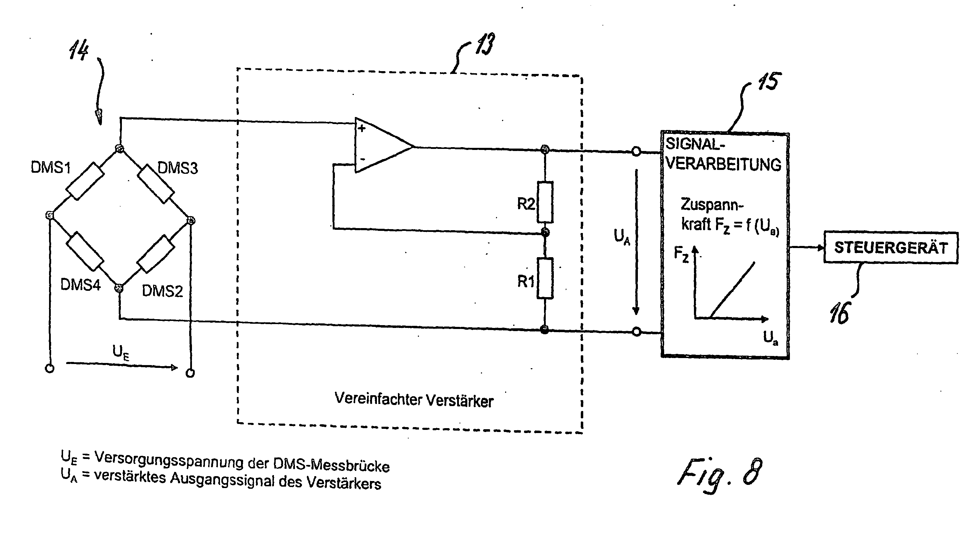

Über ein an den Bremsbetätigungshebeln 4 und/oder an den Bremssattel 1 oder ein anderes geeignetes Element angeschlossenes Kabel 12 kann - ggf. zusammen mit weiteren Daten- und/oder Spannungsversorgungsleitungen - das Mess-Signal einer MessSchaltung zugeleitet werden, wie sie in Fig. 8 dargestellt ist.

Am Bremsbetätigungshebel 4 läßt sich durch Anbringen von ein bis vier Dehnungsmeßstreifen an der Vorderseite und/oder Rückseite des Bremsbetätigungshebels 4 eine Viertel-, Halb- bzw. Vollbrücke zur Auswertung der auftretenden Spannungen realisieren.

Die Meßschaltung weist eine Meßbrücke 14 aus vier je einen Widerstand RDMS1, RDMS2, RDMS3, RDMS4 bildenden Dehnungsmeßstreifen 7 auf, an die eine Meßspannung UE gelegt wird. Die Meßbrücke der Fig. 8 wird ggf. durch den als Miniaturverstärker auslegbaren Verstärker 13 zur Vollbrücke ergänzt. Das Ausgangssignal der Meßbrücke 14 wird einem Verstärker 13 zugeleitet, dessen Ausgangssignal ein der Bremskraft proportionaler Spannungswert ist. Dieser Wert wird ggf. einer Signalaufbereitungseinheit 15 und von dort zur Auswertung einem Steuergerät 16 für die Bremse (z.B. ein EBS-Steuergerät) zugeführt.

Der Verstärker 13 läßt sich als Miniaturverstärker vorteilhafterweise in die Bremse integrieren. Das Kabel 12 muß dann nur zwei Versorgungskabel mit einer Speisespannung aufweisen und zwei Leitungen für das Meßsignal. Ebenso ist es denkbar, den Verstärker 13 in die Rückseite der Dehnungsmeßstreifen 1 zu integrieren.

Bei einer Messung mit zwei und besser noch vier Dehnungsmeßstreifen 7 läßt sich auch der Temperatureinfluß auf die Messung eliminieren.

Der Verstärker 13 ist auch direkt in dem Bremsbetätigungshebel 4 integrierbar (nicht dargestellt). Damit lassen sich die Leitungen zum Verstärker kurz halten und die Störungen auf das Meßsignal werden reduziert. Alternativ dazu kann das Signal über einen Sender an der Rückseite des Bremsbetätigungshebels 4 berührungslos nach außen übertragen werden. Dies hat den Vorteil, daß keine Leitungen vom sich bewegenden Bremsbetätigungshebel 4 zum ruhenden Sattel 1 gelegt werden müssen. Die Energieversorgung des Meßsystems erfolgt hierbei auch berührungslos.

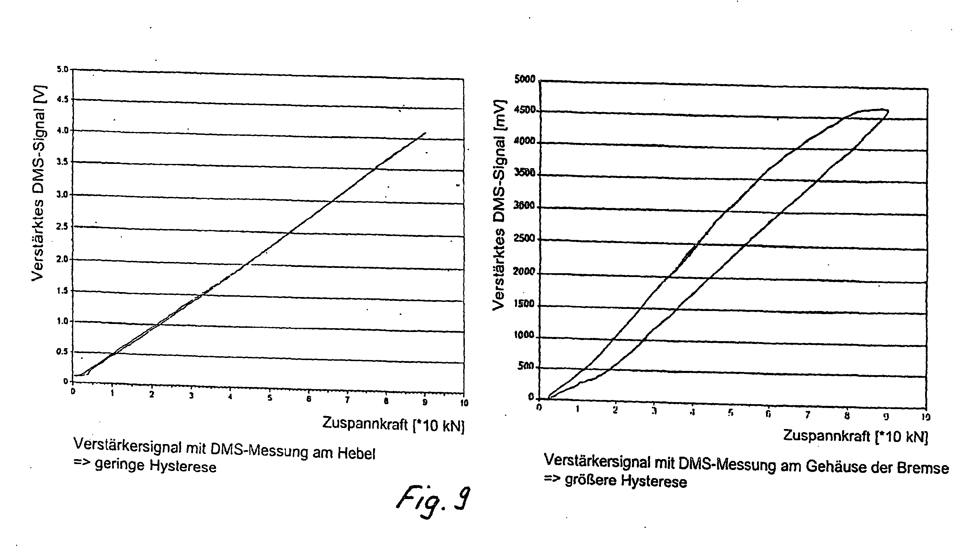

Zur Steuerung der Bremse ist ein Zusammenhang zwischen dem Meßsignal und der Bremskraft zu finden. Bei der nicht erfindungsgemäßen Messung der Spannungen am Bremsbetätigungshebel 4 ergibt sich ein im Wesentlichen linearer und in einem Datenspeicher vorspeicherbarer Zusammenhang nach Art der Fig. 9. Damit läßt sich einem Meßsignal eindeutig eine Bremskraft zuordnen, welche zur Steuerung und Regelung der Bremse erforderlich ist.

## Patentansprüche

1. Scheibenbremse mit einem Aktuator, der einen Betätigungshebel aufweist und in einem Bremssattel (1) angeordnet ist, der vorzugsweise ein Verschlussgehäuse aufweist, und mit einem Spannungssensor, der mindestens einen, vorzugsweise mehrere Dehnungsmessstreifen (7) aufweist, wobei dem Spannungssensor eine Messschaltung zur Auswertung der Spannungssignale zur Ermittlung der Bremskraft nachgeschaltet ist, **dadurch gekennzeichnet dass** am Bremssattel (1) an dessen von der Bremsscheibe abgewandten, rückwärtigen Bereich oder am Verschlussgehäuse (9) für den Bremssattel der oder die Dehnungsmessstreifen angeordnet sind.

2. Scheibenbremse nach einem der vorstehenden Ansprüche, **dadurch gekennzeichnet, daß** die Dehnungsmeßstreifen (7) auf einem Trägerblech angeordnet sind, welches an eine Meßstelle angeschweißt ist.

3. Scheibenbremse nach einem der vorstehenden Ansprüche, **dadurch gekennzeichnet, daß** die Dehnungsmeßstreifen (7) durch Aufkleben befestigt sind.

4. Scheibenbremse nach einem der vorstehenden Ansprüche, **dadurch gekennzeichnet, daß** die Meßschaltung eine Meßbrücke (14) aus je einen Widerstand (DMS1, RDMS2, RDMS3, RDMS4) bildenden Dehnungsmeßstreifen (7) aufweist.

5. Scheibenbremse nach einem der vorstehenden Ansprüche, **dadurch gekennzeichnet, daß** die Meßschaltung einen Verstärker (13) aufweist, der an die Meßbrücke (14) angeschlossen ist.

6. Scheibenbremse nach einem der vorstehenden Ansprüche, **dadurch gekennzeichnet, daß** der Verstärker (13) an den Bremssattel, den Bremsträger (6) und/oder den Bremshebel angesetzt ist.

7. Scheibenbremse nach einem der vorstehenden Ansprüche, **dadurch gekennzeichnet, daß** die Meßschaltung eine Signalaufbereitungseinheit (15) aufweist.

8. Scheibenbremse nach einem der vorstehenden Ansprüche, **dadurch gekennzeichnet, daß** die Meßschaltung mit einem Steuergerät (15) für die Bremse verbunden ist.

9. Scheibenbremse nach einem der vorstehenden Ansprüche, **dadurch gekennzeichnet, daß** die Meßschaltung über eine Datenleitung oder über eine IR- oder Funkstrecke mit dem Steuergerät (15) für die Bremse verbunden ist.

10. Scheibenbremse nach einem der vorstehenden Ansprüche, **dadurch gekennzeichnet, daß** der Verstärker (13) als Miniaturverstärker ausgelegt ist.

## Claims

1. Disc brake including an actuator which comprises an actuating lever and is disposed in a brake calliper (1), which comprises preferably an enclosing casing, and including a voltage sensor comprising at least one, preferably several, resistance strain gauge(s) (7), wherein a measuring circuit is connected on the output side of said voltage sensor for analysing the voltage signals for determining the braking force, **characterised in that** said resistance strain gauge(s) is/are disposed on said brake calliper (1) on the latter's rear side turned away from the brake disc or on said enclosing casing (9) for said brake calliper.

2. Disc brake according to Claim 1, **characterised in that** said resistance strain gauges (7) are disposed on a supporting metal sheet welded to a measuring site.

3. Disc brake according to any of the preceding Claims, **characterised in that** said resistance strain gauges (7) are fastened by adhesive sticking.

4. Disc brake according to any of the preceding Claims, **characterised in that** said measuring circuit includes a measuring bridge (14) composed of resistance strain gauges (7) constituting each one resistor (RDMS1, RDMS2, RDMS3, RDMS4).

5. Disc brake according to any of the preceding Claims, **characterised in that** said measuring circuit comprises an amplifier (13) connected to said measuring bridge (14).

6. Disc brake according to any of the preceding Claims, **characterised in that** said amplifier (13) is fitted to said brake calliper, the brake backing plate (6) and/or brake lever.

7. Disc brake according to any of the preceding Claims, **characterised in that** said measuring circuit includes a signal processing unit (15).

8. Disc brake according to any of the preceding Claims, **characterised in that** said measuring circuit is connected to a controller unit (15) for the brake.

9. Disc brake according to any of the preceding Claims, **characterised in that** said measuring circuit is connected to said controller unit (15) for the brake via a data line or via an IR or radio link.

10. Disc brake according to any of the preceding Claims, **characterised in that** said amplifier (13) is configured as miniaturised amplifier.

## Revendications

1. Frein à disque à un acteur comprenant un levier de commande, qui est disposé dans un étrier de frein (1), qui renferme, de préférence, un carter de fermeture, et à un capteur de tension comprenant au moins une, de préférence plusieurs, jauge(s) extensométrique(s) (7), dans lequel un circuit de mesure est relié, du côté de sortie dudit capteur de tension, pour l'analyse des signaux de tension pour la détermination de l'effort de freinage, **caractérisé en ce que** ladite (lesdits) jauge(s) extensométrique(s) est/sont disposée(s) audit étrier de frein (1), du côté arrière du dernier en opposition du disque de frein, ou audit carter de fermeture (9) pour ledit étrier de frein.

2. Frein à disque selon la revendication 1, **caractérisé en ce que** lesdites jauges extensométriques (7) sont disposées à une plaque de métal d'appui, qui est soudée à un point de mesure.

3. Frein à disque selon une quelconque des revendications précédentes, **caractérisé en ce que** lesdites jauges extensométriques (7) sont fixées par collage.

4. Frein à disque selon une quelconque des revendications précédentes, **caractérisé en ce que** ledit circuit de mesure comprend un ohmmètre à pont (14) composé des jauges extensométriques (7), dont chacune constitue une résistance (RDMS1, RDMS2, RDMS3, RDMS4).

5. Frein à disque selon une quelconque des revendications précédentes, **caractérisé en ce que** ledit circuit de mesure comprend un amplificateur (13) relié audit ohmmètre à pont (14).

6. Frein à disque selon une quelconque des revendications précédentes, **caractérisé en ce que** ledit amplificateur (13) est monté audit étrier de frein, à la flasque de frein (6) et/ou au levier de frein.

7. Frein à disque selon une quelconque des revendications précédentes, **caractérisé en ce que** ledit circuit de mesure renferme une unité de traitement des signaux (15).

8. Frein à disque selon une quelconque des revendications précédentes, **caractérisé en ce que** ledit circuit de mesure est relié à une unité de commande (15) pour le frein.

9. Frein à disque selon une quelconque des revendications précédentes, **caractérisé en ce que** ledit circuit de mesure est relié à ladite unité de commande (15) pour le frein via une ligne de transmission de données ou via une liaison IR ou radio.

10. Frein à disque selon une quelconque des revendications précédentes, **caractérisé en ce que** ledit amplificateur (13) est configuré sous forme d'un amplificateur miniature.
